# EUROPÄISCHE PATENTSCHRIFT

(11) **EP 2 411 695 B1**
(45) Veröffentlichungstag und Bekanntmachung des Hinweises auf die Patenterteilung: **17.04.2013**
(21) Anmeldenummer: 10704768.0
(22) Anmeldetag: 19.02.2010
(51) Int. Cl.: F16D 66/02

(54) **EINRICHTUNG ZUR BREMSBELAGVERSCHLEISSÜBERWACHUNG EINER BREMSE**
DEVICE FOR BRAKE PAD WEAR MONITORING OF A BRAKE
AGENCEMENT DE SURVEILLANCE DE L'USURE DES PLAQUETTES DE FREIN

(30) Priorität: 25.03.2009 DE 102009014799
(43) Veröffentlichungstag der Anmeldung: 01.02.2012
(73) Patentinhaber: KNORR-BREMSE Systeme für Nutzfahrzeuge GmbH, 80809 München (DE)
(72) Erfinder: LACHERMEIER, Jakob, 85356 Freising (DE)
(74) Vertreter: Mattusch, Gundula
(86) Internationale Anmeldenummer: PCT/EP2010/001838
(87) Internationale Veröffentlichungsnummer: WO 2010/108663

(56) Entgegenhaltungen:
- DE-A1- 4 243 875
- DE-U1- 9 312 119

## Beschreibung

Die Erfindung betrifft eine Einrichtung zur Bremsbelagverschleißüberwachung einer Bremse nach dem Oberbegriff des Anspruchs 1

Einrichtungen zur Bremsbelagverschleißüberwachung sind dem Fachmann in verschiedenen Ausführungen bekannt, so aus der DE 93 12 119 Ul in einer Auslegung als Drehpotentiometer, welches dazu ausgelegt ist, über ein Getriebe untersetzte Drehungen eines Nachstellspindel eines Nachstellers einer pneumatisch betätigten Scheibenbremse zu erfassen (Summenverschleißüberwachung).

Daneben ist es auch bekannt, Bremsbeläge mit Kontakten zu versehen, welche das Erreichen eines maximal zulässigen Verschleißweges anzeigen (Endverschleißüberwachung).

Die Erfindung hat die Aufgabe, die Funktion derartiger Einrichtungen bzw. Systeme zur Bremsbelagverschleißüberwachung, die sich an sich bewährt haben, zu erweitern und somit derartige Einrichtungen weiter zu verbessern.

Die Erfindung löst diese Aufgabe durch den Gegenstand der Ansprüche 1 und 3.

Anspruch 1 schafft eine Einrichtung bzw. ein System zur Bremsbelagverschleißüberwachung einer Bremse, mit einer Vorrichtung zur Bremsbelagverschleißüberwachung eines ersten Typs (z.B. eine Summenverschleißüberwachung) und einer Vorrichtung zur Bremsbelagverschleißüberwachung eines zweiten Typs (z.B. eine Endverschleißüberwachung), die Vorrichtung zur Bremsbelagverschleißüberwachung des ersten Typs und die Vorrichtung zur Bremsbelagverschleißüberwachung des zweiten Typs mittels eines Verbindungselements miteinander verbunden (bzw. verschaltet) sind.

Anspruch 3 schafft zudem eine Vorrichtung zur Funktionserweiterung einer Einrichtung zur Bremsbelagverschleißüberwachung einer Bremse, wobei die Vorrichtung ein Verbindungselement aufweist, welches zur Herstellung einer die Einrichtung funktionserweiternde Verbindung zwischen der funktionserweiternden Vorrichtung und der zu erweiternden Einrichtung ausgestaltet ist.

Vorteilhafte Ausgestaltungen der Erfindung sind in den Unteransprüchen gegeben.

Die Erfindung bietet gegenüber dem Stand der Technik wesentliche Vorteile. Durch die mittels der Erfindung geschaffene Möglichkeit, an Einrichtungen zur Bremsbelagverschleißüberwachung, die zwei verschiedene Vorrichtungen zur Belagverschleißüberwachung aufweisen, diese zu verknüpfen bzw. zu verschalten, wird die Sicherheit dieser Einrichtungen erhöht.

Nachfolgend wird die Erfindung unter Bezug auf die Zeichnung näher beschrieben. Es zeigt:
- Fig. 1a: einen Teil eines schematischen elektrischen Schaltbilds einer Einrichtung zur Bremsbelagverschleißüberwachung eines ersten Typs;
- Fig. 1b: das in Fig. 1a gezeigte Schaltbild mit einer Funktionserweiterung;
- Fig. 2a: einen Teil eines schematischen elektrischen Schaltbilds einer Einrichtung zur Bremsbelagverschleißüberwachung eines zweiten Typs;
- Fig. 2b: das in Fig. 2a gezeigte Schaltbild mit einer Funktionserweiterung.

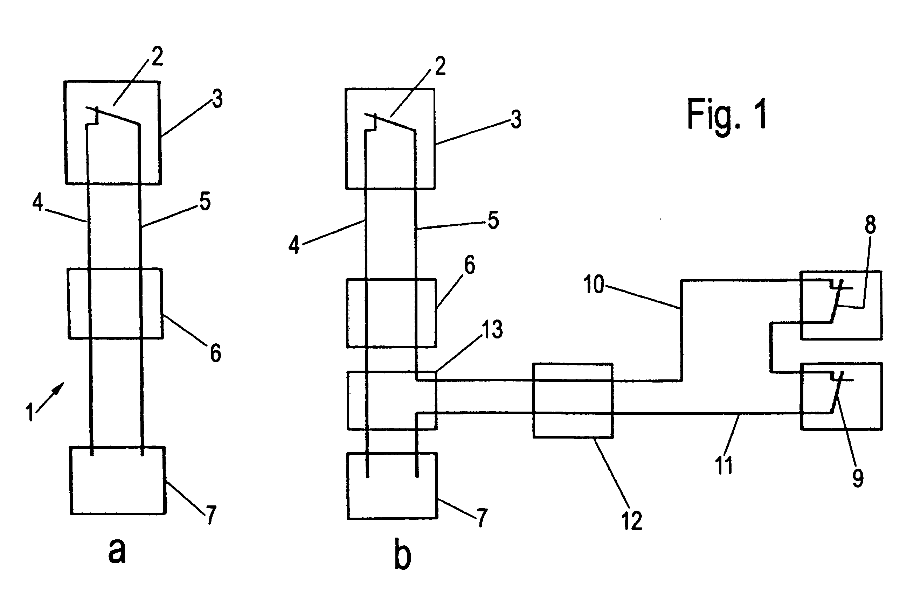

Fig. 1a zeigt einen Teil eines schematischen elektrischen Schaltbilds einer Einrichtung 1 zur Bremsbelagverschleißüberwachung einer Scheibenbremse mit Schwimmsattelprinzip (nicht dargestellt).

Dargestellt ist ein elektrisches Erfassungselement, beispielsweise ein mit einem Öffner 2 versehenes Erfassungselement, das eine Bewegung eines Nachstellelements einer Bremse (nicht dargestellt) erfasst. Hierbei ist das Erfassungselement derart an der zu überwachenden Bremse angeordnet, dass das Erfassungselement dann ein elektrisches Signal erzeugt, also z. B. der Öffner öffnet, wenn der Verschleiß der zu überwachenden Bremsbeläge ein Maß von hier z.B. 37 mm überschritten hat, so dass mittels des Nachstellelementes eine dann das Erfassungselement auslösende Nachstellaktivität erforderlich gemacht wird. Eine derartige Bremsbelagverschleißüberwachung wird als Summenverschleißüberwachung bezeichnet, da auf diese Weise beide Beläge und die Bremsscheibe einer Bremse überwacht werden. Ein ungleicher Verschleiß der Beläge kann nicht überwacht werden. Hierbei kann ein Bremsbelag bereits vollständig verschlissen sein, ohne dass das Erfassungselement ein elektrisches Signal erzeugt.

Der Öffner 2 ist in einem Gehäuse 3 zum Schutz vor schädlichen Einwirkungen angeordnet. Das vom Öffner 2 im Auslösefall erzeugte Signal (Öffnen der Öffnerkontakte) gelangt über elektrische Leitungen 4 und 5 über eine Gehäuseschnittstelle 6 zu einer Fahrzeugschnittstelle 7. Von der Fahrzeugschnittstelle 7 wird das Signal an eine Anzeige- und/oder Auswerteeinrichtung (nicht dargestellt) weitergeleitet, beispielsweise an eine Signalleuchte für den Kraftfahrer und/oder an ein Steuergerät (oder einen Bordcomputer). In einem Steuergerät kann das Signal weiterverarbeitet und beispielsweise für einen zu einem späteren Zeitpunkt erfolgenden Werkstattbesuch zusammen mit einem Kilometerstand gespeichert werden. Aufgrund der Funktion des Erfassungselementes 1a kann die Auswertung des Signals keine völlige Sicherheit auf die Restbelagstärke und den Scheibenzustand geben. Somit kann z. B. bei einer gesetzlich geforderten Untersuchung in Deutschland nach §29 (HU, SP) die Auswertung der Restbelagstärke über Erfassungselement 1a nicht herangezogen werden.

In Fig. 1b ist das elektrische Schaltbild einer mit einer funktionserweiterten Vorrichtung versehenen Bremsbelagverschleiß-Überwachungseinrichtung nach Fig. 1a dargestellt.

Bei den mit den Bezugszeichen 8 und 9 bezeichneten Endverschleißkontakten, handelt es sich beispielsweise um in einen Bremsbelag eingebettete elektrische Leiter, die bei einem bestimmten Verschleißzustand (Abnutzung) des Bremsbelags durch Abrieb zerstört werden und damit im elektrischen Verhalten einem Öffner-Kontakt gleichen, der geöffnet wird.

Die Endverschleißkontakte 8, 9 sind als eine Vorrichtung zur Überwachung des Bremsbelagverschleißes über elektrische Leiter 10, 11 und eventuell über eine Gehäuseschnittstelle 12 mit einem Verbindungselement 13 verbunden.

Mittels des Verbindungselementes 13 erfolgt eine elektrische Verschaltung derart, dass die Endverschleißkontakte 8, 9 in Reihe mit dem Öffner 2 (Summenverschleißüberwachung) verschaltet werden. Auf diese Weise wird erreicht, dass bereits beim Öffnen einer der in Reihe geschalteten Öffner 2, 8, 9 ein elektrisches Signal erzeugt wird, welches in einer bereits oben beschriebenen Weise angezeigt, ausgewertet und/oder weiterverarbeitet werden kann.

In vorteilhafter Weise kann so eine bestehende Einrichtung zur Bremsbelagverschleißüberwachung einer Bremse, beispielsweise die einer erste Vorrichtung zur Belagverschleißüberwachung aufweist (beispielsweise eine Summenverschleißüberwachung), um die Funktion einer zweiten Belagverschleißüberwachungsvorrichtung (beispielsweise eine Endverschleißüberwachung) erweitert werden.

Beispielsweise können Fahrzeugbremsen, die lediglich mit einer Summenverschleißüberwachung ausgestattet sind, mit Hilfe der Erfindung um die Funktionalität der Endverschleißüberwachung erweitert werden und somit die Restbelagstärke sowie ein Mindestscheibenmaß sichergestellt werden. Hierzu ist lediglich die Montage von Endverschleißkontakte 8, 9 aufweisenden Bremsbelägen (nicht gezeigt) und die Anbringung eines erfindungsgemäßen Verbindungselementes 13 erforderlich. An der Fahrzeugschnittstelle 7 und den Auswerte- und Anzeigeeinrichtungen sind keine Modifikationen erforderlich.

Das Verbindungselement 13 kann beispielsweise als Adapter ausgestaltet sein, der Mittel zur Herstellung einer elektrischen und mechanischen Verbindung aufweist. Zur Herstellung und Sicherung einer geeigneten mechanischen Verbindung zwischen dem Adapter und der zu erweiternden Einrichtung kann der Adapter Rast- Klemm- und/oder Gewindemittel aufweisen.

Zur Herstellung einer geeigneten elektrischen Verbindung kann der Adapter Steckverbindungsmittel, Schneid-Klemmverbindungsmittel, Schraubverbindungsmittel oder Quetschverbindungsmittel aufweisen.

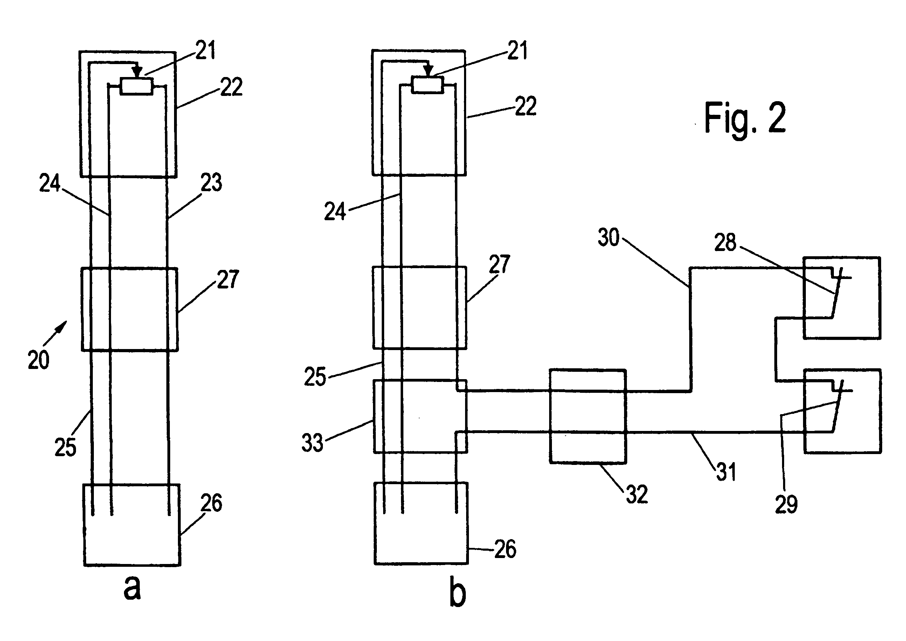

Fig. 2a zeigt einen Teil eines schematischen elektrischen Schaltbilds einer Einrichtung 20 zur Bremsbelagverschleißüberwachung. Dargestellt ist ein elektrisches Erfassungselement, beispielsweise ein mit einem Potentiometer 21 versehenes Erfassungselement, das eine Bewegung eines Nachstellelements einer Bremse (nicht dargestellt) erfasst. Im Unterschied zu den in den Fig. 1a und 1b dargestellten Einrichtungen wird die Bewegung des Nachstellelements kontinuierlich erfasst. D.h. es wird ein elektrisches Signal, beispielsweise eine elektrische Spannung, generiert, das einen Rückschluss auf eine aktuelle Stellung des Nachstellelements zulässt. Somit kann im Unterschied zu den in den Fig. 1a und 1b dargestellten Einrichtungen ein Nachstellbereich und nicht lediglich ein Nachstellpunkt überwacht werden. Eine derartige Überwachung wird auch als stetige oder kontinuierliche Überwachung bezeichnet. Ein ungleicher Verschleiß des inneren und äußeren Belag kann nicht überwacht werden. Hierbei kann ein Bremsbelag bereits vollständig verschlissen sein, obwohl das elektrische Signal keinen Rückschluss auf die erreichte Mindestbelagstärke gibt.

Das Potentiometer 21 ist in einem Gehäuse 22 angeordnet, um es beispielsweise vor schädlichen Einflüssen zu schützen. Mittels elektrischer Leitungen 23, 24 wird das Potentiometer 21 mit einer elektrischen Spannung, beispielsweise mit einer Gleichspannung von 5V, versorgt. Über eine elektrische Leitung 25, wird die zu einem Nachstellpunkt proportionale Spannung an eine Fahrzeugschnittstelle 26 geleitet. An der Fahrzeugschnittstelle 26 wird die Versorgungsspannung bereitgestellt und die zu einem Nachstellpunkt proportionale Spannung wird an eine Anzeige und/oder Weiterverarbeitungseinrichtung (beide nicht dargestellt) zur Anzeige und/oder Weiterverarbeitung weitergeleitet.

Die Leitungen 23, 24, 25 werden über eine Gehäuseschnittstelle 27 weiter geleitet.

In Fig. 2b ist das elektrische Schaltbild einer mit einer erfindungsgemäßen Vorrichtung funktionserweiterten Einrichtung nach Fig. 2a dargestellt.

Bei den mit den Bezugszeichen 28 und 29 bezeichneten Endverschleißkontakten, handelt es sich beispielsweise um in einen Bremsbelag eingebettete elektrische Leiter, die bei einem bestimmten Verschleißzustand (Abnutzung) des Bremsbelags durch Abrieb zerstört werden und damit im elektrischen Verhalten einem Öffner-Kontakt gleichen, der geöffnet wird.

Die Endverschleißkontakte 28, 29 sind über elektrische Leiter 30, 31 und eventuell über eine Gehäuseschnittstelle 32 mit einem erfindungsgemäßen Verbindungselement 33 verbunden.

Mittels des Verbindungselementes 33 erfolgt eine elektrische Verschaltung der Endverschleißkontakte 28, 29 mit dem Potentiometer 21 (Summenverschleißüberwachung) derart, dass ein Öffnen wenigstens eines der Endverschleißkontakte 28, 29 elektronisch ausgewertet werden kann. Diese Verschaltung und Auswertung kann auf verschiedene Art und Weise erfolgen, dies ist dem Fachmann bekannt. Beispielsweise, kann unter der Voraussetzung, dass die Spannungserfassung, der an der Leitung 25 abgreifbaren Spannung, ausreichend hochohmig erfolgt, von einem konstanten Stromfluss durch die Leitungen 23 und 24 und somit auch durch die Endverschleißkontakte 28, 29 ausgegangen werden. Öffnet mindestens ein Endverschleißkontakt 28, 29, so ändert sich dieser Stromfluss sprunghaft. Eine derartige Änderung kann von einer Auswerteeinrichtung erkannt, angezeigt und/oder weiterverarbeitet werden.

In vorteilhafter Weise kann so eine bestehende Einrichtung zur stetigen Bremsbelagverschleißüberwachung, beispielsweise eine Summenverschleißüberwachung, um die Funktion einer Endverschleißüberwachung erweitert werden. Beispielsweise können Fahrzeugbremsen, die lediglich mit einer Summenverschleißüberwachung ausgestattet sind, mit Hilfe der Erfindung um die Funktionalität der Endverschleißüberwachung erweitert werden.

Hierzu ist lediglich die Montage von Endverschleißkontakten 28, 29 aufweisenden Bremsbelägen (nicht gezeigt) und die Anbringung eines erfindungsgemäßen Verbindungselementes 33 erforderlich. An der Fahrzeugschnittstelle 26 und den Auswerte- und Anzeigeeinrichtungen sind keine Modifikationen erforderlich.

Hinsichtlich der Ausgestaltung des Verbindungselements 33 gelten die zu dem Verbindungselement 13 bereits gemachten Ausführungen.

Die Erfindung schafft die Möglichkeit, bestehende Einrichtungen zur Bremsbelagverschleißüberwachung 1, 20 ohne Änderungen an der Fahrzeugschnittstelle 7, 26 um zusätzliche Funktionen zu erweitern. Hierdurch wird u.a. eine Redundanz der Überwachung erreicht, da zusätzliche Bremsbelagzustände ausgewertet werden können. Dies führt zu einer Erhöhung der Sicherheit der erweiterten Verschleißüberwachungsanlagen und kann z. B. bei einer gesetzlich geforderten Untersuchung zur Auswertung der Restbelagstärke herangezogen werden. Die bestehenden Einrichtungen zur Bremsbelagverschleißüberwachung 1, 20 können ungleiche Verschleißzustände der Beläge nicht erfassen. Hierbei kann ein Bremsbelag bereits vollständig verschlissen sein, obwohl das elektrische Signal keinen Rückschluss auf die erreichte Mindestbelagstärke gibt.

Die Erfindung ist nicht auf die beschriebenen Ausführungsbeispiele beschränkt, die auf vielfache Weise abgewandelt werden können. Insbesondere ist es möglich die genannten Merkmale in anderen als den genannten Kombinationen auszuführen.

Insbesondere ist es denkbar ein Verbindungselement 13, 33 mit elektrischen und/oder mechanischen Codiermittel auszustatten. Auf diese Weise kann eine Verschaltung nicht zulässiger Kombinationen von Einrichtungen sicher verhindert werden.

Wird das Verbindungselement 13, 33 mit einem Identifizierungsmittel ausgestattet, kann beispielsweise eine Auswerteeinrichtung eine zugeschaltete funktionserweiternde Vorrichtung erkennen und beispielsweise mit einer ggf. automatischen Softwareanpassung reagieren.

Anstelle der Endverschleißkontakte könnten auch Verschleiß-Widerstandskontakte als eine der Vorrichtungen zur Bremsbelagverschleißüberwachung genutzt werden.

## Patentansprüche

1. Einrichtung zur Bremsbelagverschleißüberwachung einer Bremse, mit einer Vorrichtung zur Bremsbelagverschleißüberwachung eines ersten Typs, wie Z.B. eine Summenverschleißüberwachung und einer Vorrichtung zur Bremsbelagverschleißüberwachung eines zweiten Typs, wie Z.B. eine Endverschleißüberwachung wobei die Vorrichtung zur Bremsbelagverschleißüberwachung des ersten Typs und die Vorrichtung zur Bremsbelagverschleißüberwachung des zweiten Typs mittels eines Verbindungselements (13, 33) miteinander verbunden sind, **dadurch gekennzeichnet, dass** das Verbindungselement (13, 33) zwischen Gehäuseschnittstellen (6, 12; 27, 32) der Vorrichtungen und einer Fahrzeugschnittstelle (7; 26) angeordnet ist.

2. Einrichtung nach Anspruch 1, **dadurch gekennzeichnet, dass** die Vorrichtung des ersten Typs, welche als Summenverschleißüberwachungsvorrichtung ausgestattet ist, um die Funktionalität einer Endverschleißüberwachung erweitert ist.

3. Vorrichtung zur Funktionserweiterung einer Bremsbelagverschleiß-Überwachungseinrichtung (1, 20) einer Bremse, wobei die Vorrichtung ein Verbindungselement (13, 33) aufweist, welches zur Herstellung einer die Überwachungseinrichtung (1, 20) funktionserweiternden Verbindung zwischen der funktionserweiternden Vorrichtung und der zu erweiternden Einrichtung (1, 20) ausgestaltet und zwischen Gehäuseschnittstellen (6, 12; 27, 32) der funktionserweiternden Verbindung und der Zu erweiternden Einrichtung (1, 20) und einer Fahrzeugschnittstelle (7, 26) angeordnet ist.

4. Vorrichtung nach Anspruch 3, **dadurch gekennzeichnet, dass** das Verbindungselement (13, 33) ein Mittel zur Herstellung einer elektrischen Verbindung und/oder zur Herstellung einer mechanischen Verbindung aufweist.

5. Vorrichtung nach Anspruch 4, **dadurch gekennzeichnet, dass** das Mittel zur Herstellung einer elektrischen Verbindung Steckverbindungsmittel aufweist.

6. Vorrichtung nach Anspruh 4, **dadurch gekennzeichnet, dass** das Mittel zur Herstellung einer elektrischen Verbindung Schneid-Klemmverbindungsmittel oder Schraubverbindungsmittel aufweist.

7. Vorrichtung nach Anspruch 4, **dadurch gekennzeichnet, dass** das Mittel zur Herstellung einer elektrischen Verbindung Quetschverbindungsmittel aufweist.

8. Vorrichtung nach Anspruch 4, **dadurch gekennzeichnet, dass** das Mittel zur Herstellung einer mechanischen Verbindung Rast-Klemm- und/oder Gewindemittel aufweist.

9. Vorrichtung nach einem der vorstehenden Ansprüche, **dadurch gekennzeichnet, dass** das Verbindungselement (13, 33) elektrische und/oder mechanische Codierungsmittel aufweist.

10. Vorrichtung nach einem der vorstehenden Ansprüche, **dadurch gekennzeichnet, dass** das Verbindungselement (13, 33) Identifikationsmittel aufweist.

## Claims

1. A device for brake pad wear monitoring of a brake, having an apparatus for monitoring brake pad wear of a first type such as, for example, total wear monitoring, and an apparatus for monitoring brake pad wear of a second type such as, for example, final-position wear monitoring, wherein the apparatus for monitoring brake pad wear of the first type and the apparatus for monitoring brake pad wear of the second type are connected to one another by means of a connecting element (13, 33), **characterised in that** the connecting element (13, 33) is disposed between housing interfaces (6, 12; 27, 32) of the apparatuses and a vehicle interface (7; 26).

2. The device as claimed in claim 1, **characterised in that** the apparatus of the first type, which is equipped as a total wear monitoring apparatus, is expanded by the functionality of final wear monitoring.

3. An apparatus for expanding the function of a brake pad wear monitoring device (1, 20) of a brake, wherein the apparatus has a connecting element (13, 33), which is configured to produce a connection expanding the function of the monitoring device (1, 20) between the function-expanding apparatus and the device (1, 20) which is to be expanded and is arranged between housing interfaces (6, 12; 27, 32) of the function-expanding connection and the device to be expanded (1, 20).

4. The apparatus as claimed in claim 3, **characterised in that** the connecting element (13, 33) has a means for producing an electrical connection and/or for producing a mechanical connection.

5. The apparatus as claimed in claim 4, **characterised in that** the means for producing an electrical connection has plug-type connecting means.

6. The apparatus as claimed in claim 4, **characterised in that** the means for producing an electrical connection has insulation displacement connecting means or screw connection means.

7. The apparatus as claimed in claim 4, **characterised in that** the means for producing an electrical connection has crimp connecting means.

8. The apparatus as claimed in claim 4, **characterised in that** the means for producing a mechanical connection has latching means, clamping means and/or threaded means.

9. The apparatus as claimed in one of the preceding claims, **characterised in that** the connecting element (13, 33) has electrical and/or mechanical coding means.

10. The apparatus as claimed in one of the preceding claims, **characterised in that** the connecting element (13, 33) has identification means.

## Revendications

1. Agencement de contrôle de l'usure de la garniture d'un frein, comprenant un dispositif de contrôle de l'usure d'une garniture de frein d'un premier type, comme par exemple le contrôle de l'usure totale, et un dispositif de contrôle de l'usure de la garniture d'un frein d'un deuxième type, comme par exemple un contrôle de l'usure finale, dans lequel le dispositif de contrôle de l'usure de la garniture d'un frein du premier type et le dispositif de contrôle de l'usure de la garniture d'un frein du deuxième type sont reliés entre eux au moyen d'un élément (13, 33) de liaison, **caractérisé en ce que** l'élément (13, 33) de liaison est monté entre une interface (6, 12, 27, 32) de boîtier des dispositifs et une interface (7, 26) de véhicule.

2. Agencement suivant la revendication 1, **caractérisé en ce que** le dispositif du premier type, qui est équipé d'un dispositif de contrôle de l'usure totale, est agrandi de la fonctionnalité d'un contrôle de l'usure finale.

3. Agencement pour étendre la fonction d'un dispositif (1, 20) de contrôle de l'usure de la garniture d'un frein, dans lequel l'agencement a un élément (13, 33) de liaison, qui est conformé pour ménager une liaison, étendant la fonction du dispositif (1, 20) de contrôle, entre l'agencement étendant la fonction et le dispositif (1, 20) dont la fonction doit être étendue, et est monté entre les interfaces (6, 12, 27, 32) de boîtier de la liaison étendant la fonction et du dispositif (1, 20) dont la fonction doit être étendue et une interface (7, 26) de véhicule.

4. Agencement suivant la revendication 3, **caractérisé en ce que** l'élément (13, 33) de liaison a un moyen pour ménager une liaison électrique et/ou pour ménager une liaison mécanique.

5. Agencement suivant la revendication 4, **caractérisé en ce que** le moyen pour ménager une liaison électrique a un moyen de liaison par enfichage.

6. Agencement suivant la revendication 4, **caractérisé en ce que** le moyen pour ménager une liaison électrique a des moyens de raccord autodénudant ou des moyens de vissage.

7. Agencement suivant la revendication 4, **caractérisé en ce que** le moyen pour ménager une liaison électrique a des moyens de liaison à pincement.

8. Agencement suivant la revendication 4, **caractérisé en ce que** le moyen pour ménager une liaison mécanique a des moyens d'encliquetage, de serrage et/ou à filetage.

9. Agencement suivant l'une des revendications précédentes, **caractérisé en ce que** l'élément (13, 33) de liaison a des moyens de codage électrique et/ou mécanique.

10. Agencement suivant l'une des revendications précédentes, **caractérisé en ce que** l'élément (13, 33) de liaison a des moyens d'identification.
